# EUROPEAN PATENT SPECIFICATION

(11) **EP 3 399 941 B1**
(45) Date of publication and mention of the grant of the patent: **20.09.2023**
(21) Application number: 16883511.4
(22) Date of filing: 22.12.2016
(51) Int. Cl.: A61C 8/00

(54) **DRILL-LESS DENTAL IMPLANT AND USES THEREOF**
DENTALIMPLANTAT OHNE BOHREN UND VERWENDUNGEN DAVON
IMPLANT DENTAIRE SANS FRAISAGE ET SES UTILISATIONS

(30) Priority: 10.01.2016 IL 24352316
(43) Date of publication of application: 14.11.2018
(73) Proprietor: Cortex Dental Implants Industries Ltd., 22832 Shlomi (IL)
(72) Inventor: TRISI, Paolo, 65123 Pescara (IT); MAMRAEV, Meir, 7567594 Rishon Lezion (IL); LASTER, Zvi, 15208 Poriya Elite (IL)
(74) Representative: Beck & Rössig European Patent Attorneys
(86) International application number: PCT/IL2016/051369
(87) International publication number: WO 2017/118971

(56) References cited:
- DE-U1- 20 112 507
- DE-U1-202011 104 513
- FR-A1- 2 808 183
- MX-A- JL04 000 042
- RU-C2- 2 427 343
- US-A- 3 466 748
- US-A- 3 672 058
- US-A- 4 406 623
- US-A- 5 971 985
- US-A1- 2005 186 537
- US-A1- 2009 220 914

## Description

The present invention relates to a dental implant comprising the features of the preamble portion of claim 1.

A dental implant comprising the features of the preamble portion of claim 1 is known from US 4,406,623 A. Further dental implants are known from US 3,466,748 A, US 4,406,623 A, DE 201 12 507 U1, DE 20 2011 104 513 U1, and US 2009/220914 A1.

A dental implant is a surgical component that interfaces with a jaw bone to support dental prosthesis such as a crown, bridge, denture, and facial prosthesis. Some types of dental implants rely on the process of osseointegration, where the dental implant forms an intimate bond with the jaw bone tissue. Osseointegration is facilitated for example by using titanium as a material for the preparation of a dental implant, and inclusion of pores in the dental implant to allow the growth of bone tissue extensions into the pores. Currently, prior to implanting a dental implant the jaw bone is drilled in order to facilitate insertion of the dental implant into the jaw bone. Following insertion of the dental implant into the jaw bone, a healing time is required for osseointegration to occur in order to increase the fixation of the dental implant in the jaw bone before loading the dental implant with either a dental prosthetic or an abutment to which a dental prosthetic is attached.

Prior to the implantation of a dental implant, a drilling process is conducted, involving a series of drills, each with an increasing diameter, in order to prepare a hole into which the dental implant is to be placed. The drilling process has several disadvantages, for example, inability to control the direction of drilling, and loss of jaw bone tissue during drilling which results in a low amount of jaw bone tissue that is left to hold the dental implant, especially when there is a need to implant the dental implant in a narrow jaw bone tissue, like in the front side of the lower jaw.

It is therefore an object of the present invention to provide a dental implant that is particularly suitable for narrow jaw bones and can be accommodated stably..

This technical problem is solved by a dental implant comprising the features of claim 1. Advantageous embodiments are indicated in further claims.

According to one embodiment, the height of the penetrating element constitutes a range of substantially 25% to 33% of the total height of the drill-less dental implant.

According to a further embodiment, the diameter of the upper edge of the drill-less dental implant is substantially higher than the diameter of the lower edge of the penetrating element.

According to still a further embodiment, the diameter of the upper edge of the drill- less dental implant is at least 3 millimetres.

According to an additional embodiment, the core of the drill-less dental implant is conical. Embodiments are herein described, by way of example only, with reference to the accompanying drawings. With specific reference now to the drawings in detail, it is stressed that the particulars shown are by way of example and for purposes of illustrative discussion of the preferred embodiments, and are presented in the cause of providing what is believed to be the most useful and readily understood description of the principles and conceptual aspects of the embodiments. In this regard, no attempt is made to show structural details in more detail than is necessary for a fundamental understanding, the description taken with the drawings making apparent to those skilled in the art how several forms may be embodied in practice.

In the drawings:
- Fig. 1: schematically illustrates, according to an exemplary embodiment, a perspective view of a prior art dental implant requiring drilling of a jaw bone before implantation.
- Fig. 2: schematically illustrates, according to an exemplary embodiment, a perspective view of a drill-less dental implant according to the present invention.
- Fig. 3: schematically illustrates, according to an exemplary embodiment, a cross-section view of a jaw bone.
- Figs. 4A-E: schematically illustrate, according to exemplary embodiments, steps of a method for implanting a drill-less dental implant in a jaw bone.

Before explaining at least one embodiment in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting. In discussion of the various figures described herein below, like numbers refer to like parts. The drawings are generally not to scale.

For clarity, non-essential elements were omitted from some of the drawings.

The present invention provides a dental implant that does not require a drilling process on a jaw bone prior to the implantation of a dental implant.

The present invention provides a dental implant that enables compression of a jaw bone tissue during the implantation of the dental implant.

The present invention provides a dental implant that enables adjustment of the direction of insertion of the dental implant into a jaw bone during the implantation of the dental implant.

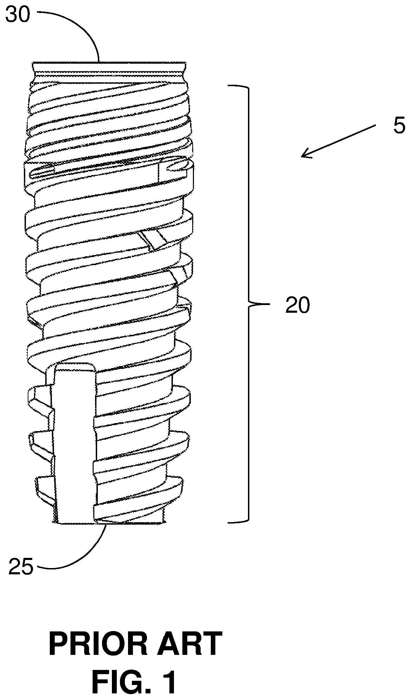

Fig. 1 schematically illustrates a perspective view of a prior art dental implant 5 requiring a drilling process of a jaw bone before implantation. The prior art dental implant 5 comprises a screw thread 20 configured to be rotationally screwed into a drilled hole in a jaw bone, and a prosthesis support 30 configured to support a dental prosthesis, for example a crown, a bridge and a denture. The prosthesis support 30 is positioned at the upper edge of the prior art dental implant 1. In addition, the lower edge 25 of the prior art dental implant 5 is typically blunt as illustrated in Fig. 1. Furthermore, the core of the prior art dental implant is substantially cylindrical, in other words, the diameter of the lower edge 25 is substantially similar to the diameter of the upper edge, where the prosthesis support 30 is positioned.

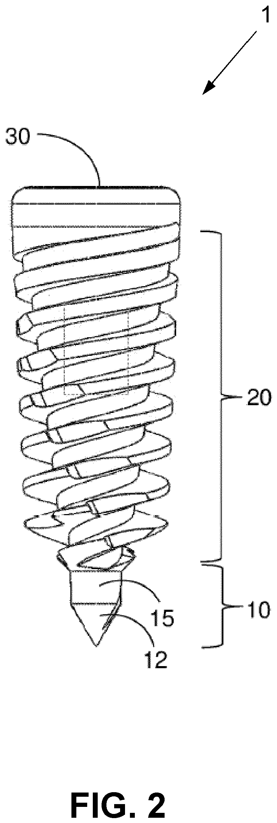

Figs. 2 schematically illustrates, according to an exemplary embodiment, a perspective view of a drill-less dental implant 1 according to the present invention. The drill- less dental implant 1 comprises a screw thread 20 configured to be rotationally screwed into a jaw bone, and a prosthesis support 30 configured to support a dental prosthesis and attached to the upper edge of the screw thread 20. Additionally, the drill-less dental implant 1 further comprises a penetrating element 10 configured to linearly penetrate into a jaw bone, attached to a lower edge of the screw thread 20. As illustrated in Fig. 2B, the penetrating element 10 comprises a sharp smooth tip 12 and an elongated smooth cylinder 15 positioned between the sharp smooth tip 12 and the screw thread 20. The shape of the penetrating element 10 allows linear penetration into a jaw bone .

According to an embodiment, the height of the penetrating element 10 constitutes a range of substantially 25% to 33% of the total height of the drill-less dental implant 1.

According to yet another embodiment, the diameter of the upper edge of the drill-less dental implant 1 is substantially higher than the diameter of the lower edge of the penetrating element 10.

According to a further embodiment, the diameter of the upper edge of the drill-less dental implant 1 is at least 3 millimetres.

According to an exemplary embodiment illustrated in Fig. 2, the core of the drill-less dental implant is conical.

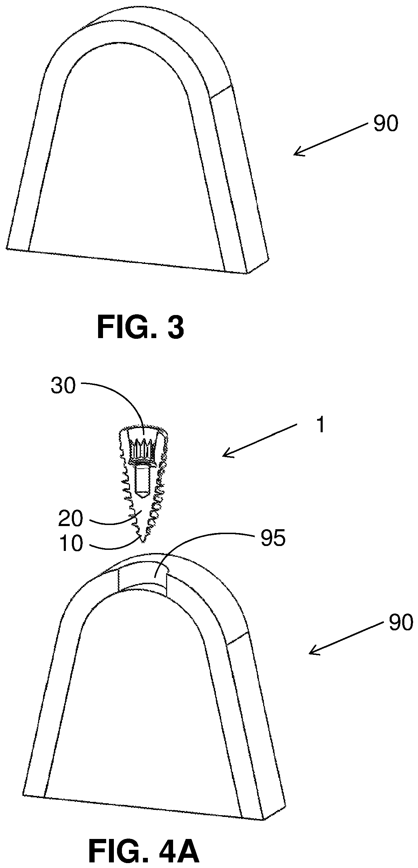

Fig. 3 schematically illustrates, according to an exemplary embodiment, a cross-section view of a jaw bone 90.

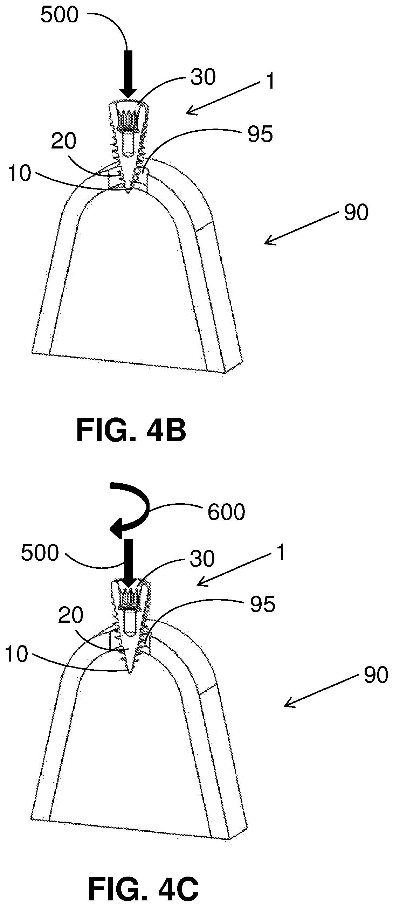

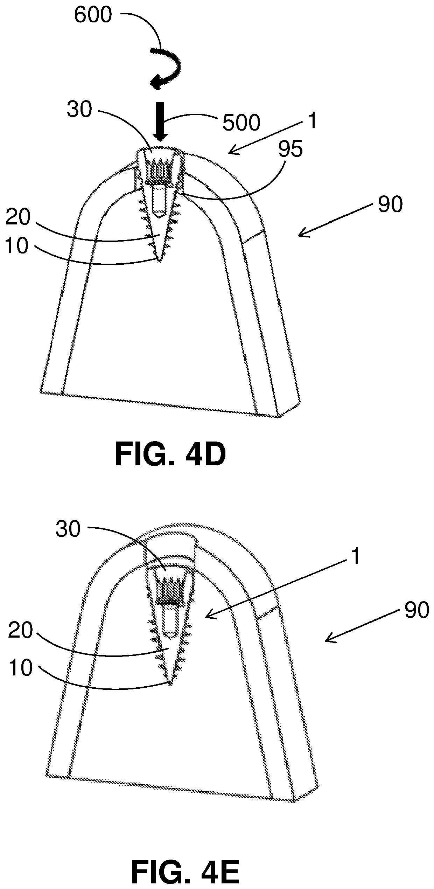

Figs. 4A-E schematically illustrate steps for implanting a drill-less dental implant 1 in a jaw bone 90, showing a cross-section view of a jaw bone 90 and a cross-section view of a drill-less dental implant 1 during the operation of the method. Implanting the drill-less dental implant 1 in a jaw bone 90 comprises:
- puncturing a starter hole 95 in a jaw bone 90, as illustrated in Fig. 4A.
- linearly penetrating the penetrating element 10 of the drill-less dental implant 1 into the jaw bone 90 through the starter hole 95, as indicated with arrow 500 in Fig. 4B;
- rotationally screwing and linearly penetrating the drill-less dental implant 1 into the jaw bone 90, as indicated with arrows 600 and 500, respectively, in Figs. 4C and 4D, until the drill-less dental implant 1 is inserted into the jaw bone 90 in a desired depth, as illustrated in Fig. 4E.

Puncturing a starter hole 95 in a jaw bone 90 may be accomplished by using the penetrating element 10 of the drill-less dental element 1.

However, before puncturing a starter hole 95 in a jaw bone 90, drilling a starter drill in the jaw bone 90is also possible.

In case there is a need to adjust the direction of penetration of the drill-less dental implant 1 into the jaw bone 90, it is possible, during the linearly penetrating a penetrating element 10 of a drill-less dental implant 1 into the jaw bone 90 through the starter hole 95, and/or during rotationally screwing and linearly penetrating the drill-less dental implant 1 into the jaw bone 90 - to adjust the direction of insertion of the drill-less dental implant 1 into the jaw bone 90. This may be accomplished for example by tilting the drill-less dental implant 1 to a desired direction during the linear penetration of the penetrating element 10 into the starter hole 95, and or during the rotational screwing and linear penetration of the drill-less dental implant 1 into the jaw bone 90.

One advantage of the present invention over the currently widely used method for implanting a dental implant involving a drilling process of a hole in a jaw bone for accommodating the dental implant, is that the present invention allows adjustment of the direction of penetration of the drill-less dental implant 1 into the jaw bone during the linear penetration, and/or during the rotational screwing and linear penetration of the drill-less dental implant 1 into the jaw bone, without causing damage to the jaw bone tissue, in comparison to the method involving drilling in the jaw bone tissue where any mistake in the drilling may complicate the implantation procedure and require a long and unpleasant process of bone building to fill-in the undesired loss of jaw bone tissue due to the incorrect drilling. The drill-less dental implant 1 of the present invention negates this kind of complication, as no drilling of the jaw bone is needed. Nevertheless, in some cases, a starter drill only may be employed in order to facilitate the penetration of the drill-less dental implant into the jaw bone.

Another advantage of the present invention is its suitability to narrow jaw bones, like the frontal side of the lower jaw. Drilling a hole in such narrow jaw bone tissues removes a great amount of tissue from the jaw bone while the mass and strength of the remaining tissue may not be enough for stably accommodating a dental implant. In contrast thereto, implanting a drill-less dental implant 1 according to the present invention does not require removal of jaw bone tissue, thus leaving enough tissue to stably accommodate the drill-less dental implant 1.

Yet another advantage of the present invention is compression of a jaw bone tissue that is achieved by implanting the drill-less dental implant 1 without pre-drilling of the jaw bone. Drilling a hole in the jaw bone removes jaw bone tissue, while the compression state of the remaining jaw bone tissue is not changed. Implanting the drill-less dental implant 1 of the present invention directly in a jaw bone compresses the jaw bone tissue that surrounds the site of implantation of the drill-less dental implant 1, and thus increases the forces that are exerted by the compressed jaw bone tissue towards the drill-less dental implant 1. As a result, the stability of the drill-less dental implant 1 in the jaw bone is increased.

Although the invention has been described in conjunction with specific embodiments thereof, it is evident that many modifications and variations will be apparent to those skilled in the art. Accordingly, it is intended to embrace all such modifications and variations that fall within the scope of the appended claims.

## Claims

1. A dental implant (1), comprising:
a screw thread (20) configured to be rotationally screwed into a jaw bone,
a prosthesis support (30) attached to an upper edge of the screw thread (20), and
a penetrating element (10) configured to linearly penetrate into a jaw bone,
wherein said penetrating element (10) is attached to a lower edge of said screw thread (20) and comprises a sharp smooth tip (12), and
wherein the screw thread (20) is positioned between the penetrating element (10) and the prosthesis support (30),
wherein the implant (1) is a drill-less implant for implantation directly in a jaw bone while compressing a jaw bone tissue that surrounds a site of the implantation, thus increasing forces that are exerted by the compressed jaw bone tissue towards the drill-less dental implant (1), and thus increasing a stability of the drill-less implant in the jaw bone, **characterized in that**
the penetrating element (10) comprises an elongated smooth cylinder (15) positioned between the sharp smooth tip (12) and the screw thread (20).

2. The drill-less dental implant (1) of claim 1, wherein the height of the penetrating element (10) constitutes a range of substantially 25% to 33% of the total height of the drill-less dental implant (1).

3. The drill-less dental implant (1) of claim 1 or 2, wherein the diameter of the upper edge of the drill-less dental implant (1) is substantially higher than the diameter of the lower edge of the penetrating element (10).

4. The drill-less dental implant (1) of claim 3, wherein the diameter of the upper edge of the drill-less dental implant (1) is at least 3 millimeters.

5. The drill-less dental implant (1) of claim 3 or 4, wherein a core of the drill-less dental implant (1) is conical.

## Patentansprüche

1. Zahnimplantat (1), umfassend:
ein Schraubgewinde (20), das konfiguriert ist, um in einen Kieferknochen drehbar eingeschraubt zu werden,
einen Prothesenträger (30), der an einer Oberkante des Schraubgewindes (20) befestigt ist, und
ein Eindringelement (10), das konfiguriert ist, um in einen Kieferknochen linear einzudringen,
wobei das Eindringelement (10) an einer Unterkante des Schraubengewindes (20) befestigt ist und eine scharfe, glatte Spitze (12) umfasst, und
wobei das Schraubgewinde (20) zwischen dem Eindringelement (10) und dem Prothesenträger (30) positioniert ist,
wobei das Implantat (1) ein bohrloses Implantat für eine Implantation direkt in einem Kieferknochen ist, während ein Kieferknochengewebe komprimiert wird, das eine Stelle der Implantation umgibt, wodurch Kräfte erhöht werden, die durch das komprimierte Kieferknochengewebe in Richtung des bohrlosen Zahnimplantats (1) ausgeübt werden, und wodurch eine Stabilität des bohrlosen Implantats in dem Kieferknochen erhöht wird, **dadurch gekennzeichnet, dass**
das Eindringelement (10) einen länglichen, glatten Zylinder (15) umfasst, der zwischen der scharfen, glatten Spitze (12) und dem Schraubgewinde (20) positioniert ist.

2. Bohrloses Zahnimplantat (1) nach Anspruch 1, wobei die Höhe des Eindringelements (10) einen Bereich von im Wesentlichen 25 % bis 33 % der Gesamthöhe des bohrlosen Zahnimplantats (1) darstellt.

3. Bohrloses Zahnimplantat (1) nach Anspruch 1 oder 2, wobei der Durchmesser der Oberkante des bohrlosen Zahnimplantats (1) im Wesentlichen höher ist als der Durchmesser der Unterkante des Eindringelements (10).

4. Bohrloses Zahnimplantat (1) nach Anspruch 3, wobei der Durchmesser der Oberkante des bohrlosen Zahnimplantats (1) mindestens 3 Millimeter beträgt.

5. Bohrloses Zahnimplantat (1) nach Anspruch 3 oder 4, wobei ein Kern des bohrlosen Zahnimplantats (1) konisch ist.

## Revendications

1. Implant dentaire (1), comprenant :
un filetage de vis (20) conçu pour être vissé en rotation dans un os de mâchoire,
un support de prothèse (30) fixé à un bord supérieur du filetage de vis (20), et
un élément de pénétration (10) conçu pour pénétrer linéairement dans un os de mâchoire,
dans lequel ledit élément de pénétration (10) est fixé à un bord inférieur dudit filetage de vis (20) et comprend une pointe lisse acérée (12), et
dans lequel le filetage de vis (20) est positionné entre l'élément de pénétration (10) et le support de prothèse (30),
dans lequel l'implant (1) est un implant sans fraisage destiné à être implanté directement dans un os de mâchoire tout en comprimant un tissu osseux de mâchoire qui entoure un site de l'implantation, augmentant ainsi des forces qui sont exercées par le tissu osseux de mâchoire comprimé vers l'implant dentaire sans fraisage (1), et augmentant ainsi une stabilité de l'implant sans fraisage dans l'os de mâchoire, **caractérisé en ce que**
l'élément de pénétration (10) comprend un cylindre lisse allongé (15) positionné entre la pointe lisse acérée (12) et le filetage de vis (20).

2. Implant dentaire sans fraisage (1) selon la revendication 1, dans lequel la hauteur de l'élément de pénétration (10) constitue une plage de sensiblement 25 % à 33 % de la hauteur totale de l'implant dentaire sans fraisage (1).

3. Implant dentaire sans fraisage (1) selon la revendication 1 ou 2, dans lequel le diamètre du bord supérieur de l'implant dentaire sans fraisage (1) est sensiblement supérieur au diamètre du bord inférieur de l'élément de pénétration (10).

4. Implant dentaire sans fraisage (1) selon la revendication 3, dans lequel le diamètre du bord supérieur de l'implant dentaire sans fraisage (1) est d'au moins 3 millimètres.

5. Implant dentaire sans fraisage (1) selon la revendication 3 ou 4, dans lequel un noyau de l'implant dentaire sans fraisage (1) est conique.
